# EUROPÄISCHE PATENTANMELDUNG

(11) **EP 1 145 936 A1**
(43) Veröffentlichungstag der Anmeldung: **17.10.2001**
(21) Anmeldenummer: 01108905.9
(22) Anmeldetag: 10.04.2001
(51) Int. Cl.: B62D 17/00

(54) **Vorrichtung zur Spureinstellung an einem Fahrzeug**

(30) Priorität: 13.04.2000 DE 10018532
(71) Anmelder: Continental Aktiengesellschaft, 30165 Hannover (DE)
(72) Erfinder: Korte, Hans-Bernd, 30419 Hannover (DE)

(57) **Zusammenfassung**

Die Erfindung betrifft eine Vorrichtung zur Spureinstellung an einem Fahrzeug mit zumindest einem Paar genau oder etwa nebeneinander angeordneten Tragelementen (1,2). Bei Landfahrzeugen sind die Tragelemente Räder. Zur besseren Ausnutzung der durch eine Spureinstellung bewirkten Axialkraft schlägt die Erfindung vor,
- dass der Spurwinkel (α) dieser Tragelemente (1,2) während der Fahrt aktiv verstellbar ist
- und zwar in der Weise, dass die Vorrichtung bei Auftreten einer kritischen Situation wie Bremsen und/oder querkraftreiches Lenken und/oder Schleudern die Spureinstellung in Richtung Vorspur (engl.:toe-in) oder noch weiter in Richtung Vorspur selbsttätig verstellt.

Vorzugsweise enthält die Vorrichtung einen Rechner (6) enthält, welcher die Verstellung des Spurwinkels (α) steuert. Die Verwendung eines solchen Rechners ermöglicht der Vorrichtung, den Spurwinkel (α) in Abhängigkeit von der Gierate situationsgerecht einzustellen. Mit Kopplung an eine Geschwindigkeitsmesseinrichtung (7) vermag eine solche Vorrichtung auch den Spurwinkel (α) in Abhängigkeit von der Fahrgeschwindigkeit einzustellen.

## Beschreibung

Die Erfindung betrifft eine Vorrichtung zur Spureinstellung an einem Fahrzeug. Gemäß dem Oberbegriff des Patentanspruches 1 soll ein solches Fahrzeug zumindest ein Paar genau oder etwa nebeneinander angeordneter Tragelemente - bevorzugt Räder - aufweisen. Deren Spurwinkel sollte bekanntlich von Zeit zu Zeit in der Werkstatt kontrolliert werden und ggf. - z. B. bei ungleichmäßigem Reifenabrieb - neu eingestellt werden.

Als ein Fahrzeug in diesem Sinne sind zunächst alle Landfahrzeuge gemeint mit mehr als zwei Rädern, also Motorradgespanne mit Seitenwagen - bei denen das Hinterrad des Motorrades etwa neben dem Seitenwagenrad angeordnet ist - Go-carts, Renn- und Sportwagen, Personenkraftwagen, Lastkraftwagen, Sattelzugmaschinen, ein- und mehrachsige Anhänger (engl.: trailer) und Sattelauflieger (engl.: semi-trailer). Sinngemäß gilt die Erfindung auch für Wasserfahrzeuge, wo anstelle von Rädern Rümpfe das Fahrzeuggewicht tragen, also Katamarane und Trimarane, und auch Kufenfahrzeuge wie Eissegler, wo Kufen als Tragelemente dienen und das Äquivalent zu "Rädern" bilden. An einem Tragflächenboot ist das Analogon zur Spureinstellung die V-Stellung der linken und rechten Tragflächenhälften. Weil die von Rädern getragenen Landfahrzeuge die größte gewerbliche Bedeutung haben, wird in der folgenden Beschreibung und den Ansprüchen der Begriff "Rad" als Synonym für "Tragelement" verwendet.

Im Jargon der Fachleute wird häufig anstelle des präziseren Ausdruckes "Spurwinkel" einfach nur das Wort "Spur" verwendet.

Die bei Landfahrzeugen eingestellten Spurwinkel liegen üblicherweise zwischen -0,2° (Nachspur) und +1,0° (Vorspur). Während der Fahrt verändern sie sich bei vielen Achskonstruktionen in Abhängigkeit von der Einfederung, also der Radlast. Nach der Spureinstellung in der Werkstatt ist die gesamte Funktion des Schräglaufwinkels über dem Einfederweg festgelegt.

Bei einigen wenigen Achskonstruktionen verändert sich der Schräglaufwinkel auch in Abhängigkeit von der übertragenen Querkraft. Dies wird durch eine elastische Aufhängung entsprechender Lenker erreicht, siehe zum Beispiel die 5-Lenker-Hinterachse des Mercedes-Typs W124. Diese Vorspurverstellung während der Fahrt erfolgt passiv und erlaubt deshalb nicht die Berücksichtigung zum Beispiel der Gierrate oder der Straßenbeschaffenheit.

Der stationäre Seitenkraftaufbau eines Reifens wird üblicherweise im Versuch dadurch bestimmt, dass beginnend mit einer Stellung der Rotationsachse im rechten Winkel zur aufgezwungenen Fahrtrichtung - also der "Spureinstellung" 0° - allmählich eine Schrägstellung zur Ausgangsstellung der Rotationsachse eingestellt wird. Der Winkel, um den die tatsächliche Rotationsachse des Rades mit dem zu untersuchenden Reifen von dem rechten Winkel zur aufgezwungenen Laufrichtung abweicht, wird als "Spur" oder "Spurwinkel" bezeichnet, und zwar bei einer Orientierung zur Fahrzeuginnenseite als "Vorspur" und bei einer Orientierung zur Fahrzeugaußenseite als "Nachspur".
Die vom Reifen aufgebaute Seitenkraft wird bei einer bestimmten konstanten Geschwindigkeit über dem Schräglaufwinkel aufgetragen, zum Beispiel im Intervall von -10° bis +10°. In der Nähe des Schräglaufwinkels 0° schneidet der Graph der Querkraft die dem Schräglaufwinkel gewidmete Koordinatenachse. In der Nähe dieses Schnittpunktes verläuft dieser Graph praktisch linear.

Beispielhaft erwähnt sei, dass die Vorspureinstellung (engl.: toe-in) an der Vorderachse eines Mercedes Benz W124 bei +25 Minuten mit dem Toleranzfeld +10 Minuten und - 25 Minuten beträgt, also zwischen +0° und +0,58° liegt. An der Hinterachse des gleichen Typs fordert der Hersteller die Vorspureinstellung + 20 Minuten mit dem Toleranzfeld +10 Minuten und -10 Minuten, also zwischen 0,17° und 0,5°. Beim frontgetriebenen Renault Clio 1,8i lautet die Herstellerforderung für die Hinterachse beispielsweise +40 Minuten mit dem Toleranzfeld +20 Minuten und -20 Minuten, also +0,33° bis +1,00°.

Radlager haben häufig ein gewisses Axialspiel. Wird von Null ausgehend eine Querkraft aufgebaut - zum Beispiel durch einen Lenkeinschlag - so muss dieses Spiel erst weggedrückt werden, bevor die Achse eine Querkraft empfängt. Dies verzögert die gewünschte Fahrzeugantwort. Überdies weisen manche Radlager, insbesondere Kugellager, im Bereich der Querkraft 0 eine geringere axiale Federsteifigkeit auf als ausgehend von einer gewissen Axialkraft. Auch hier führt eine Vorspureinstellung zu einer spontaneren Fahrzeugantwort auf Lenkbefehle und zu einem stabileren Geradeauslauf.

Die Fahrwerkskonstrukteure bewegen sich in dem Konflikt, dass eine deutliche Vorspureinstellung das Fahrwerk agiler wirken lassen, andererseits aber den Rollwiderstand, Reifentemperatur, Spritverbrauch und Reifenverschleiß erhöhen, weil der Spurwinkel eine Schrägstellung des Rades und somit des Reifens gegenüber der Fahrzeuglängsachse bewirkt, der aus der Differenz zwischen theoretischer und tatsächlicher Rollrichtung resultiert; dadurch erfolgt ein gewisses seitliches Rutschen des Reifens gegenüber dem Untergrund im Fahrbetrieb. Die Fahrwerkskonstrukteure müssen also jeweils einen angemessenen Kompromiss eingehen.

Die Erfindung hat die Aufgabe, den genannten Konflikt zu entspannen oder die infolge des Spurwinkels vom Reifen erzeugte Seitenkraft besser auszunützen.

Gelöst wird die gestellte Aufgabe erfindungsgemäß durch die Merkmale des Anspruches 1. Ausgehend vom Oberbegriff ist diese Lösung dadurch gekennzeichnet,
- dass der Spurwinkel besagter Tragelemente oder Räder - zur Anpassung an die jeweilige Fahr- oder Betriebssituation - während der Fahrt aktiv verstellbar ist
- und zwar in der Weise, dass die Vorrichtung bei Auftreten einer kritischen Situation wie Bremsen und/oder querkraftreiches Lenken und/oder Schleudern die Spureinstellung in Richtung Vorspur oder noch weiter in Richtung Vorspur selbsttätig verstellt.

Das Wort "aktiv" meint ihm Rahmen dieser Patentanmeldung "vermittels eines Servomotors". Dabei ist es - insbesondere bei einer starren Achse mit einer einzigen starren Spurstange - möglich, dass der Spurwinkel beider Räder mittels ein und desselben Servomotors eingestellt wird; bevorzugt aber ist jedem spureinstellbaren Rade ein eigener Servomotor zugeordnet.

Als Servomotor empfiehlt sich besonders ein Elektromotor, weil seine Aktivierung von einer elektronischen Recheneinheit aus besonders leicht kontrollierbar ist. Zur Sicherstellung einer exakten Reproduzierbarkeit der Spureinstellung empfiehlt sich besonders ein Schrittmotor. Um einerseits sein Baugewicht und seine Kosten zu begrenzen, andererseits aber ausreichend große Kräfte aufzubauen, kann es sich empfehlen, ihn stark zu untersetzen - zum Beispiel 1 : 20 - bevor er sein Drehmoment auf ein Lineargetriebe abgibt, wie etwa eine Zahnstange oder eine Kugelumlaufspindel.

Neben einem Elektromotor ist aber auch ein hydraulischer oder gar ein pneumatischer Antrieb möglich. An den bislang vorherrschenden PKW mit hydraulischer Bremsanlage ist eine besonders einfache Ausführungsform der Erfindung dadurch erreichbar, dass der jeweilige Bremsdruckzylinder neben der bekannten Funktion, die Bremsklötze gegen die Reibfläche - Bremsscheibe oder Bremstrommel - zu drücken zusätzlich noch die Aufgabe übernimmt, die Vorspur zu vergrößern. Bei dieser Ausführung der Erfindung würde also jedes Bremsmanöver auch die Vorspur der gebremsten Räder vergrößern und zwar in dem Maße, wie das jeweilige Rad gebremst ist: Für eine solche Ausführung ist kein zusätzlicher Sensor, kein zusätzlicher Aktuator oder Elektronik-Hydraulik-Wandler, keine zusätzliche Datenleitung und kein zusätzlicher Rechner erforderlich. Das Analogon gilt für Fahrzeuge mit pneumatischer Bremse, wie sie an Fahrzeugen von über 6 Tonnen Gesamtgewicht vorherrschen.

Bei Nutzfahrzeugen mit starrer Vorderachse ist es üblich, dass die beiden Räder der Vorderachse mittels einer (einzigen und ungeteilten) Spurstange (engl.: tie rod) miteinander verbunden sind, welche bewirkt, dass bei Einschlag des linken Rades - an welches das Lenkgetriebe bei Linkslenkern in der Regel allein angreift - nach links auch das rechte Rad nach links einschlägt und bei Einschlag des linken Rades nach rechts auch das rechte Rad nach rechts einschlägt. Nach einer bevorzugten Ausführung der Erfindung ist die Länge dieser Spurstange aktiv während der Fahrt verstellbar, zum Beispiel durch einen daran angeordneten Elektro-Stellmotor, der auf ein Spindelgetriebe wirkt, welches in einer Flucht mit der Spurstange angeordnet ist. Eine solche Vorrichtung wirkt also auf die Spurstange und erlaubt die bestmögliche Einstellung des Spurwinkels dieser Achse in Abhängigkeit von zumindest einer Fahr- oder Betriebssituation des Kraftfahrzeuges.

Bei den meisten Vorderachsen mit Einzelradaufhängung gibt es keine direkte Verbindung zwischen den Lenkhebeln beider Räder, also in diesem Sinne keine Spurstange. Stattdessen geht vom Lenkgetriebe nicht nur ein Koppellenker zum Lenkhebel eines Rades, sondern es geht darüberhinaus ein weiterer Koppellenker vom Lenkgetriebe zum Lenkhebel des anderen Rades. Im Jargon der Techniker werden bisweilen auch solche Koppellenker als "Spurstangen" bezeichnet. Solche Koppellenker finden sich auch an einigen wenigen, sehr aufwendigen Hinterrad-Einzelradaufhängungen. Auch bei all diesen Konstruktionen kann einer oder können beide Koppellenker einer oder mehrerer oder aller Achsen aktiv längsverstellbar ausgeführt sein oder es können deren Anlenkpunkte verschoben werden. Auch so kann mittels Einstellung der jeweils geeignetesten Spurwinkel eine für die jeweilige Fahr- oder Betriebssituation optimale Seitenkraft eingestellt werden.

Gemäß einer bevorzugten Ausführungsform der Erfindung enthält die Vorrichtung einen Rechner, welcher die Verstellung des Spurwinkels steuert. Der Fahrer selber wird also nicht mit zusätzlicher Datenverarbeitung belastet. Mit Rücksicht auf das Naturell einiger Fahrer empfiehlt es sich dabei besonders, ihm - zum Beipiel am Armaturenbrett oder am Getriebetunnel - eine Verstellmöglichkeit anzubieten, mittels derer die Schwelle ab der der Spurwinkel und/oder die Stärke mit der der Spurwinkel von der Vorrichtung verstellt wird, vom Fahrer einstellbar ist. Diese Verstellmöglichkeit sollte auch eine Stellung "0" enthalten, in der die Vorrichtung abgeschaltet ist.

Eine stabilisierende Wirkung auf das Fahrzeug um die Hochachse kann dadurch erzielt werden, dass die Vorrichtung den Spurwinkel des einen Paares von Rädern oder die Spurwinkel der mehreren Paare von Rädern in Abhängigkeit von der Gierrate des Fahrzeuges einstellt. Die Gierrate kann aus dem noch in der Entwicklung befindlichen System der Reifenseitenwand-Torsionsmessung (siehe zum Beispiel EP-PS 0 783 419) bestimmt werden oder aber über einen Gierratensensor, der vorzugsweise die Reaktionskräfte an einer trägen Masse misst, zum Beispiel an einem Kreisel.

Von Vorteil ist es auch, den Spurwinkel zumindest einer der Achsen eines Fahrzeuges in Abhängigkeit von der Fahrgeschwindigkeit, beispielsweise über Signale von Drehzahlsensoren, zu verändern. Dabei kann es sinnvoll sein, bei sehr hohen Geschwindigkeiten, wie sie typisch sind für die Autobahn, die Spurwinkel nahe an 0 heranzuführen, um die Reifenaufheizung in Grenzen zu halten und ein durch Reifenaufheizung bedingtes Versagen auszuschließen, während bis zu einem Tempo, das für Landstraßen typisch ist, beispieslweise 120 km/h, eine deutliche Vorspur eingestellt wird, beispielsweise +0,7°.

Weitere Merkmale, Vorteile und Einzelheiten der Erfindung werden nun anhand der Zeichnung, die schematische Darstellungen des Standes der Technik und von Ausführungsformen der Erfindung enthält, näher beschrieben. Dabei zeigen
- Fig. 1: eine Ausführung aus dem Stand der Technik anhand einer Draufsicht auf die vier möglichen Radpositionen eines Kraftfahrzeuges,
- Fig. 2: den Stand der Technik anhand einer Draufsicht auf eines der Vorderräder,
- Fig. 3: in einer zu Fig. 2 analogen Darstellung das Grundprinzip der gegenständlichen Erfindung und
- Fig. 4: das Gesamtschema einer Ausführungsform der Erfindung.

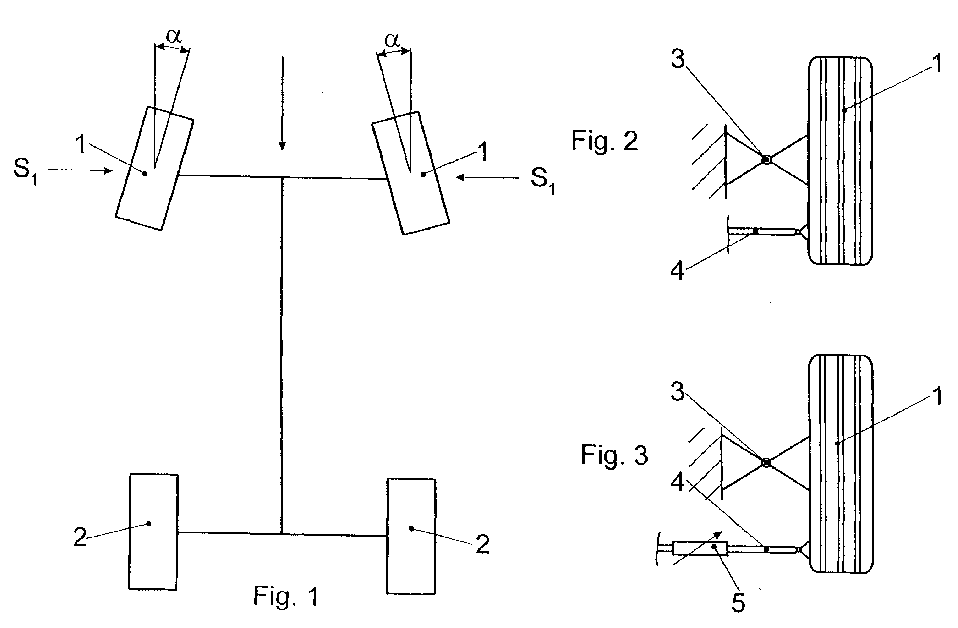

**Figur 1** zeigt schematisch und in Draufsicht die vier Radpositionen eines Kraftfahrzeuges. Die beiden Vorderräder 1 und die beiden Hinterräder 2 sind jeweils durch eine gestrichelte Linie, die die Vorder- und Hinterachse symbolisieren, verbunden, die Fahrzeuglängsachse ist durch einen Pfeil, welcher die Fahrtrichtung angibt, verdeutlicht. Wie Figur 1 zeigt, sind die beiden Vorderräder 1 gegenüber der Fahrzeuglängsachse unter einem Winkel α, der üblicherweise für beide Räder gleich groß ist, nach innen geneigt.

Durch das Einstellen eines Spurwinkels wird am betreffenden Fahrzeugrad eine Seitenkraft erzeugt, die in Figur 1 durch den Pfeil S₁ symbolisiert ist. Diese Seitenkraft hat eine erwünschte Belastung der Radlagerschalen zur Folge. Ist der Spurwinkel α auf das jeweilige Fahrzeug richtig abgestimmt, so bewirkt er eine Stabilisierung des Fahrzeugs.

**Figur 2** verdeutlicht ein übliches Prinzip der Anordnung eines Vorderrades 1 am Fahrzeug. Dabei zeigt diese Zeichnungsfigur in schematischer Darstellung das Gelenk 3, um welches das Vorderrad 1 beim Lenken und auch beim Einstellen der Spur bewegt wird. Schematisch dargestellt ist auch die Spurstange 4, die am Rad 1 exzentrisch angreift. Die Länge der Spurstange 4 ist, beispielsweise über ein Gewinde, veränderbar. Über die Spurstangen 4 werden üblicherweise auch die Lenkkräfte auf die vorderen Fahrzeugräder 1 übertragen.

**Figur 3** zeigt das Grundprinzip der gegenständlichen Erfindung anhand des rechten Vorderrades 1 und somit analog zur Darstellung gemäß Fig. 2. Angedeutet sind wieder das Gelenk 3 sowie die Spurstange 4. Mit 5 ist eine mit der Spurstange 4 zusammenwirkende Einrichtung zum variablen Verstellen der Länge der Spurstange 3 bezeichnet.

Die Einrichtung 5 zum variablen Verstellen der Länge der Spurstange 4 und somit zum variablen Verstellen des Spurwinkels α wird insbesondere über eine Elektronik gesteuert und geregelt, die verschiedene für die jeweilige Fahrsituation wichtige Parameter berücksichtigt. Im Folgenden werden dazu einige bevorzugte Beispiele angeführt.

im normalen Fahrbetrieb können die Längen der Spurstangen 4 und damit die Größe des jeweiligen Spurwinkels α automatisch hinsichtlich eines Optimums zwischen Rollwiderstand und günstiger Seitenkraft eingestellt werden. Dabei kann, insbesondere in Abhängigkeit von der Fahrzeugeschwindigkeit, auch eine hinsichtlich des Treibstoffverbrauchs vorteilhafte Einstellung vorgenommen werden. Ist jedoch in einer Fahr- bzw. Betriebssituation des Fahrzeuges eine höhere oder eine niedrigere Seitenkraft von Vorteil, können die Spurwinkel in die eine oder andere Richtung verändert bzw. vergrößert oder verkleinert werden.

Fahrsituationen, in denen eine adaptive Regelung und Anpassung des Spurwinkels von besonderem Vorteil sind, sind insbesondere folgende Situationen.

Beim Bremsen bewirkt eine Vergrößerung der Spurwinkel α, insbesondere der Vorspurwinkel, eine Erhöhung des Widerstandes der Reifen zum Untergrund, was den Bremsweg verkürzen kann.

Eine Änderung der Spurstangenlänge bzw. Koppellenkerlänge kann darüberhinaus zur Unterstützung der Lenkung eingesetzt werden. Dabei können beim Einleiten eines Lenkvorganges die auf die gelenkten Räder wirkenden Seitenkräfte gezielt beeinflusst werden, beispielsweise indem am kurvenäußeren Rad einer Achse die Vorspur vergrößert, am kurveninneren Rad der gleichen Achse verkleinert wird; dies wird bei höheren Geschwindigkeiten vorzugsweise an der Hinterachse vorgenommen, um die Drehungen um die Hochachse zu verkleinern und damit ein Schleudern unwahrscheinlicher zu machen. Bei niedrigen Geschwindigkeiten hingegen könnte das Gegenteil gemacht werden, um das Fahrzeug wendiger und agiler wirken zu lassen.

Bei Kraftfahrzeugen, bei denen ein elektronisches Stabilitätsprogramm (ESP) vorgesehen ist, mit dem in bestimmten Fahrsituationen die einzelnen Reifen gezielt abgebremst werden können, kann durch eine entsprechende Änderung der Spurwinkel eine aktive Unterstützung der stabilisierenden Wirkung erfolgen. Eine Änderung der Spurwinkel kann in Abhängigkeit von den Signalen eines Gierratensensors oder eines ähnlichen Systems eingeleitet werden. So können beim Schleudern des Fahrzeuges gezielt stabilisierende Seitenkräfte über eine Änderung der Spurwinkel α aufgebracht werden.

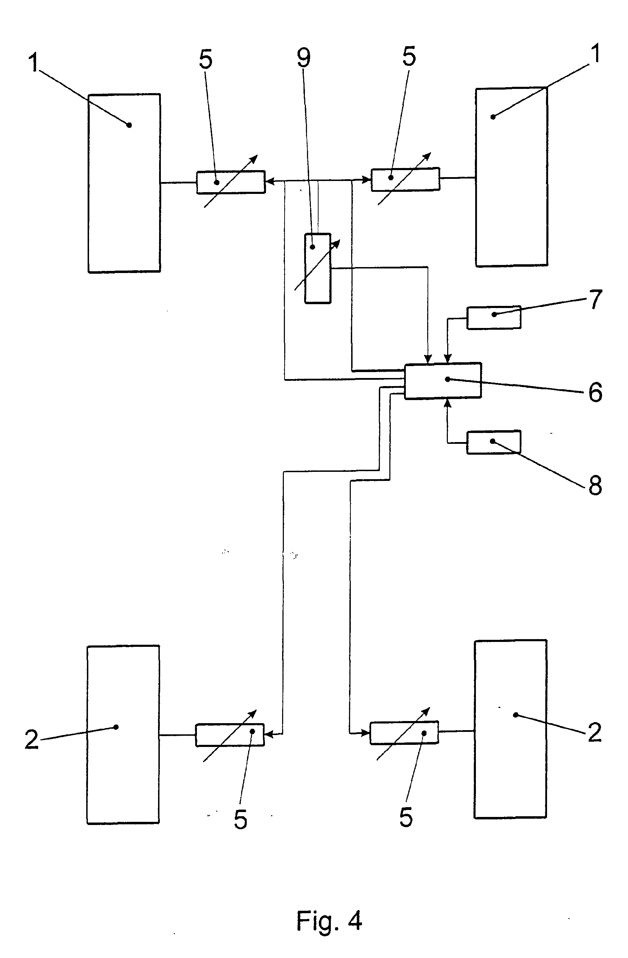

Ein erfindungsgemäßes Gesamtsystem kann so ausgelegt werden, dass es entweder auf die Räder 1 an der Vorderachse oder auf die Räder 2 an der Hinterachse oder auch auf sämtliche Räder 1, 2 des Kraftfahrzeuges wirkt. Ein grundsätzliches Schema eines derartigen, auf alle vier Räder 1, 2 wirkenden System ist in Fig. 4 dargestellt. Das Kernstück des System bildet ein entsprechend funktionierender Rechner 6, der die vorgesehenen Steuerungs- und Regelungskomponenten enthält. Bei der dargestellten Ausführungsform verarbeitet der Rechner 6 Signale von Drehzahlsensoren 7, die an sämtlichen Rädern 1, 2 angebracht sein können, ferner Signale eines Gierratensensors 8 und Signale bzw. Informationen vom Lenksystem 9 über den Lenkzustand bzw. das Lenkverhalten. In Abhängigkeit von den gelieferten Signalen, gegebenenfalls auch von weiteren, hier nicht dargestellten Sensoren und Einrichtungen, ermittelt der Rechner 6, ob und bei welchem der Räder 1, 2 und in welchem Ausmaß der Spurwinkel α geändert werden soll. Der Rechner 6 übermittelt entsprechende Signale an die Einstelleinrichtungen 5, die die jeweilige Spurstange 4 entsprechend betätigen. Bei der dargestellten Ausführungsform wirkt die Lenkung 9 übrigens auf die beiden vorderen Räder 1.

Die Änderungen des Spurwinkels α der einzelnen Räder 1, 2 können sich im Bereich von einem Hunderstelgrad bis zu mehreren Grad, vorzugsweise maximal 2° erstrecken., insbesondere bis zu einem Bereich von 8 bis 10°, erstrecken.

Die Einrichtungen 5 zur Änderung der Spurwinkel α können auf mechanische, hyraulische, pneumatische oder andere Weise funktionieren.

Die gegenständliche Erfindung ist sowohl bei Personenkraftwagen als auch bei Lastkraftwagen einsetzbar.

Denkbar ist es auch, zusätzlich oder alternativ eine vorzugsweise schon vorab definierte Änderung der Spurwinkel über eine vom Fahrer wählbare Einstellung vornehmen zu können. So kann der Fahrer von sich aus etwa eine Einstellung wählen, die auf bestimmte Fahrsituationen, beispielsweise Geländefahrt oder möglichst ökonomischer Betrieb, abgestimmt ist.

Kurz zusammengefasst betrifft also die Erfindung eine Vorrichtung zur Spureinstellung an einem Fahrzeug mit zumindest einem Paar genau oder etwa nebeneinander angeordneten Tragelementen (1, 2) wie Räder oder dergleichen. Zur besseren Ausnutzung der durch eine Spureinstellung bewirkten Axialkraft schlägt die Erfindung vor,
- dass der Spurwinkel (α) dieser Tragelemte (1, 2) während der Fahrt aktiv verstellbar ist
- und zwar in der Weise, dass die Vorrichtung bei Auftreten einer kritischen Situation wie Bremsen und/oder querkraftreiches Lenken und/oder Schleudern die Spureinstellung in Richtung Vorspur (engl.: toe-in) oder noch weiter in Richtung Vorspur selbsttätig verstellt.

Vorzugsweise enthält die Vorrichtung einen Rechner enthält, welcher die Verstellung des Spurwinkels (α) steuert. Die Verwendung eines solchen Rechners ermöglicht der Vorrichtung, den Spurwinkel (α) in Abhängigkeit von der Gierate situationsgerecht einzustellen. Mit Kopplung an eine Geschwindigkeitsmesseinrichtung vermag eine solche Vorrichtung auch den Spurwinkel (α) in Abhängigkeit von der Fahrgeschwindigkeit einzustellen.

## Patentansprüche

1. Vorrichtung zur Spureinstellung an einem Fahrzeug mit zumindest einem Paar genau oder etwa nebeneinander angeordneten Tragelementen (1, 2),
**dadurch gekennzeichnet**,
- dass der Spurwinkel (α) dieser Tragelemte (1, 2) während der Fahrt aktiv verstellbar ist
- und zwar in der Weise, dass sie bei Auftreten einer kritischen Situation wie Bremsen und/oder querkraftreiches Lenken und/oder Schleudern die Spureinstellung in Richtung Vorspur (engl.: toe-in) oder noch weiter in Richtung Vorspur selbsttätig verstellt.

2. Vorrichtung nach Anspruch 1, **dadurch gekennzeichnet, dass** sie einen Rechner enthält, welcher die Verstellung des Spurwinkels (α) steuert.

3. Vorrichtung nach Anspruch 2, **dadurch gekennzeichnet, dass** die Schwelle ab der der Spurwinkel verstellt wird und/oder die Stärke mit der der Spurwinkel verstellt wird, vom Fahrer einstellbar ist.

4. Vorrichtung nach einem der Ansprüche 1 bis 3, **dadurch gekennzeichnet, dass** sie den Spurwinkel (α) des einen Paares von Tragelementen bzw. Rädern (1, 2) oder die Spurwinkel der mehreren Paare von Tragelementen bzw. Rädern (1, 2) Achsen in Abhängigkeit von der Gierate verstellt.

5. Vorrichtung nach Anspruch 4, **dadurch gekennzeichnet, dass** sie die Gierrate aus den Daten eines die Seitenwandtorsion messenden Systemes berechnet.

6. Vorrichtung nach Anspruch 4, **dadurch gekennzeichnet, dass** sie die Gierrate mittels eines auf Massenträgheit beruhenden Gierratensensors misst.

7. Vorrichtung nach einem der Ansprüche 1 bis 6, **dadurch gekennzeichnet, dass** sie den Spurwinkel (α) in Abhängigkeit von der Fahrgeschwindigkeit verstellt.
